# EUROPÄISCHE PATENTSCHRIFT

(11) **EP 0 600 947 B1**
(45) Veröffentlichungstag und Bekanntmachung des Hinweises auf die Patenterteilung: **14.06.1995**
(21) Anmeldenummer: 92917130.4
(22) Anmeldetag: 14.08.1992
(51) Int. Cl.: C09D 183/16, C09D 163/00, C09D 5/03

(54) **HÄRTBARE PULVERFÖRMIGE MISCHUNGEN AUF BASIS VON POLYARYLENSILOXANEN**
CURABLE POWDERED MIXTURES BASED ON POLYARYL SILOXANES
MELANGES PULVERULENTS DURCISSABLES A BASE DE POLYARYLENE-SILOXANNES

(30) Priorität: 31.08.1991 DE 4129000
(43) Veröffentlichungstag der Anmeldung: 15.06.1994
(73) Patentinhaber: HOECHST AKTIENGESELLSCHAFT, 65926 Frankfurt am Main (DE)
(72) Erfinder: CHRISTENSEN, Bernd, D-6237 Liederbach (DE); FINK, Diedmar, D-6208 Taunusstein 2 (DE); LAND, Horst-Tore, D-6230 Frankfurt am Main 80 (DE)
(86) Internationale Anmeldenummer: EP9201861
(87) Internationale Veröffentlichungsnummer: WO9305121

(56) Entgegenhaltungen:
- CHEMICAL ABSTRACTS, vol. 85, no. 1, 5. Juli 1976, Columbus, Ohio, US; abstract no. 78627j; SUMI ET AL.: "Silicon-containing copolymers", Seite 20; & JP-A-51 025 600
- DATABASE WPI, Week 7805, Derwent Publications Ltd., London, GB; AN 78-08843A; & JP-A-52103 427
- DATABASE WPIL, Section Ch, Week 8930, 20. September 1989, Derwent Publications Ltd., London, GB; Class A21, AN 89-215751; & JP-A-11 52 169
- JOURNAL OF POLYMER SCIENCE: POLYMER CHEMISTRY EDITION, Bd. 18, 1980, NEW-YORK, US, Seiten 3119-3127; PACANSKY ET AL.: "Synthesis and Thermomechanical Properties of Alternating Copolymers Containing Bisphenol-A"

## Beschreibung

Pulverlacke sind lösemittelfreie Beschichtungssysteme, welche u. a. zum Beschichten von Metallmöbeln, wie Campingartikeln, Kühlschränken, Gartenmöbeln, Regalen, sowie zum Lackieren von Kleingegenständen und kompliziert geformten Werkstücken, von Fahrrädern, Nahmaschinen und anderen Metallgegenständen verwendet werden. Größtenteils werden dabei metallische Gegenstände lackiert, aber auch beispielsweise Kunststoffe sind mit der Pulverlacktechnologie lackierbar.

Gegenüber anderen Lackverfahren hat die Pulverlacktechnologie eine Reihe von Vorteilen. So arbeitet das Lackierverfahren lösemittelfrei und damit umweltfreundlich und kostengünstiger. Auch hinsichtlich der Entsorgung, Arbeitssicherheit (Abwesenheit brennbarer Lösemittel), Arbeitshygiene und des Umweltschutzes ist das Verfahren vorteilhaft. Darüber hinaus entfallen die Antrocknungszeiten der Lackschichten. Der lackierte Gegenstand wird direkt zum Einbrennofen befördert, wodurch der Zeitaufwand für den gesamten Lackiervorgang reduziert wird.

Die Pulverlacktechnologie basiert auf dem Prinzip der elektrostatischen Aufladung. Zum Aufbringen einer elektrostatischen Ladung ist z. B. das Coronaverfahren geeignet, wonach der Pulverlack bzw. das Pulver an einer geladenen Corona vorbeigeführt und dabei aufgeladen wird. Weiterhin ist hier das triboelektrische oder elektrokinetische Verfahren zu nennen, das nach dem Prinzip der Reibungselektrizität arbeitet. Als Pulverlacke werden typischerweise Epoxydharze, carboxyl- und hydroxylgruppenhaltige Polyesterharze und Acrylharze zusammen mit den entsprechenden Härtern eingesetzt. Auch Kombinationen von Harzen finden Verwendung, beispielsweise Mischungen von Epoxydharzen mit carboxylgruppenhaltigen Polyesterharzen.

Um einen guten Verlauf des Lackes zu erzielen, müssen die Pulverlacke bei der Härtungstemperatur eine niedrige Schmelzviskosität aufweisen. Diese niedrige Schmelzviskosität muß auch noch bei tiefen Härtungstemperaturen erreicht werden.

So sind beispielsweise pulverförmige Mischungen auf der Basis von Carboxylgruppen enthaltenden Polyestern und weiteren Verbindungen, welche mindestens zwei Epoxydgruppen enthalten, aus dem Stand der Technik bekannt (EP-A-0 387 692). Nach Auftragen der dort beschriebenen Pulverlacke müssen die beschichteten Werkstücke zur Aushärtung auf eine Temperatur von 140 bis 220°C für eine zum Aushärten ausreichende Zeit, im allgemeinen zwischen 10 bis 60 Minuten, erhitzt werden.

Um eine ausreichende Vernetzungsdichte, d. h. eine hohe Oberflächenqualität, zu erreichen, müssen die bekannten Pulverlackmischungen bei Temperaturen von über 140°C, teilweise über 160°C, gehärtet werden. Derartig hohe Härtungstemperaturen schließen die Lackierung einer Vielzahl von Kunststoffen oder auch von Holz aus.

Die Aufgabe der vorliegenden Erfindung ist es daher, hartbare, pulverförmige Mischungen mit Aushärtetemperaturen unterhalb von 140°C bereitzustellen. Ferner sollten die mit den erfindungsgemäßen Mischungen erzeugten Lackschichten eine hohe Transparenz und eine gute Kratzfestigkeit aufweisen und eine gute Lösemittelbeständigkeit besitzen.

Die vorliegenden Erfindung löst diese Aufgabe und betrifft eine härtbare, pulverförmige Beschichtungsmasse auf der Basis von Polyarylensiloxanen, enthaltend 1 bis 99,9 Gew. % eines oder mehrerer Polyarylensiloxane der Formel (I) 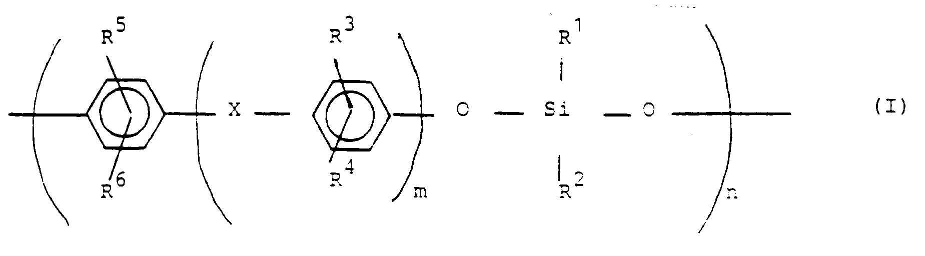
wobei die Symbole R¹, R², R³, R⁴, R⁵, R⁶, X, m und n die folgende Bedeutung haben:
R¹ und R² sind gleich oder verschieden und stehen unabhängig voneinander für einen geradkettigen oder verzweigten C₁ - C₁₂-Alkylrest, einen substituierten oder unsubstituierten C₆ - C₁₄-Arylrest oder einen gegebenenfalls substituierten Vinylrest, vorzugsweise für einen C₁ bis C₃ Alkylrest oder für einen Phenyl- oder Vinylrest.

R³, R⁴, R⁵ und R⁶ sind gleich oder verschieden und stehen unabhängig voneinander für Wasserstoff, einen verzweigten oder unverzweigten C₁ - C₃-Alkylrest oder einen substituierten oder unsubstituierten C₆ - C₁₄-Arylrest.

-X- steht für eine Gruppe 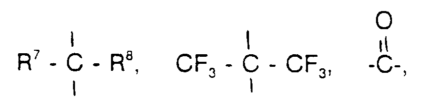
SO₂ oder für Sauerstoff oder Schwefel oder für eine Bindung.

Bevorzugt ist X eine Gruppe 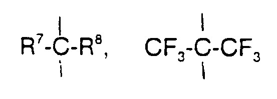
oder eine Bindung.

R⁷ und R⁸ bedeuten unabhängig voneinander Wasserstoff oder einen verzweigten oder unverzweigten C₁ - C₆-Alkyl-, oder C₆ - C₁₄-Aryl- oder einen substituierten oder unsubstituierten C₃-C₉ Cycloalkylrest. Der Index m ist Null oder 1.

Der Polymerisationsgrad n liegt im Bereich von 2 bis 100, vorzugsweise im Bereich von 2 bis 30.

Die Verbindungen der Formel (I) sind aus der EP-A-0 398 049 und der EP-A-0 030 817 als schwer entflammbare, mit Hilfe der Spritzgußtechnik verarbeitbare Thermoplasten und Dielektrika sowie als Materialien für lichtelektrisch leitende Schichten bekannt.

Die Herstellung der Polyarylensiloxane erfolgt in bekannter Weise nach üblichen Kondensationsverfahren, wie Lösungskondensation, Schmelzkondensation und Grenzflächenkondensation, aus Dihalogensilanen der Formel (II) und Polyolen der Formel (III) 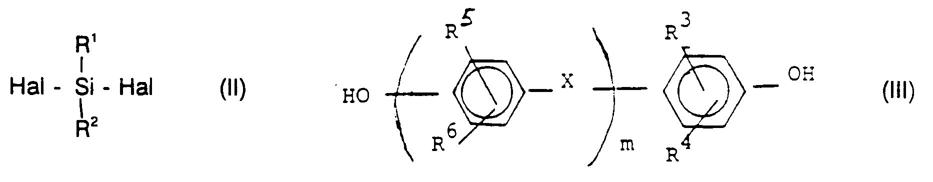
nach einem Einstufenverfahren. Die Reste R¹ und R² in der Formel (II) können hierbei gleich oder verschieden sein und stehen unabhängig voneinander für einen geradkettigen oder verzweigten C₁ - C₁₂-Alkylrest, einen substituierten oder unsubstituierten C₆ - C₁₄-Arylrest oder einen, gegebenenfalls substituierten Vinylrest. Der Rest Hal steht für Chlor oder Brom, vorzugsweise für Chlor.

R³, R⁴, R⁵ und R⁶ sind in der Formel (III) gleich oder verschieden und stehen unabhängig voneinander für Wasserstoff, einen C₁ - C₃-Alkylrest oder einen substituierten oder unsubstituierten C₆ - C₁₄-Arylrest.

-X- steht in der Formel (III) für eine Gruppe 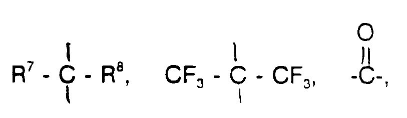
-SO₂- oder für Sauerstoff oder Schwefel oder für eine Bindung,
wobei R⁷ und R⁸ unabhängig voneinander Wasserstoff oder einen verzweigten oder unverzweigten C₁ - C₆-Alkyl- oder C₆ - C₁₄-Aryl- oder einen C₃ - C₉-Cycloalkylrest bedeuten.

Als Komponenten (II) und (III) kommen zweckmäßigerweise solche Verbindungen in Frage, welche sich in den bekannten organischen Lösemitteln lösen.

Beispiele für Verbindungen der Formel (II) sind Dimethyldichlorsilan, Methylethyldichlorsilan, Methylvinyldichlorsilan, Dimethyldibromsilan. Divinyldichlorsilan, Diethyldichlorsilan, Diisopropyldichlorsilan, Diphenyldichlorsilan und Phenylmethyldichlorsilan.

Für Verbindungen der Formel (III) kommen beispielsweise Bisphenol A, Hexafluorbisphenol A, 4,4'-Dihydroxybiphenyl, 2,2'-Dihydroxybiphenyl, 4,4'-Dihydroxydiphenylether, Hydrochinon, 2,5-Dihydroxybiphenyl, 1,1(Bis-4-hydroxyphenyl)-cyclohexan und 4,4'-Dihydroxydiphenylsulfon in Frage.

Die Verbindungen der Formeln (II) und (III) werden in einem Molverhältnis von 0,8 : 1,2 bis 1,2 : 0,8 eingesetzt, vorzugsweise in einem Molverhältnis von 1:1.

Zur Herstellung der erfindungsgemäßen Beschichtungsmassen können insbesondere auch Gemische von Verbindungen der Formel (II) und (III) eingesetzt werden. Mögliche Kombinationen sind beispielsweise
a) Bisphenol A: Dimethyldichlorsilan:Methylvinyldichlorsilan
b) Bisphenol A: Hexafluorbisphenol A:Methylvinyldichlorsilan
c) Bisphenol A: Hexafluorbisphenol A:Methylvinyldichlorsilan: Dimethyldichlorsilan
d) Hexafluorbisphenol A:Dimethyldichlorsilan:Diphenyldichlorsilan
e) Bisphenol A: Methylethyldichlorsilan:Divinyldichlorsilan
Die Polyarylensiloxane, die sich zur Herstellung der erfindungsgemäßen Beschichtungsmassen eignen, können allgemein auch Copolymere sein, die sich von einer beliebigen Anzahl an Einheiten der Formeln (II) und (III) ableiten.

Bevorzugt wird, wenn zur Herstellung der Beschichtungsmassen nicht mehr als je vier verschiedene Verbindungen der Formeln (II) und (III) eingesetzt werden. Insbesondere bevorzugt sind Beschichtungsmassen auf der Basis von Dimethyldichlorsilan und substituiertem oder unsubstituiertem Bisphenol A.

Zusätzlich zu Verbindungen der Formel (I) kann die Beschichtungsmasse 0,1 bis 95 Gew. % einer Epoxidgruppen enthaltenden Komponente enthalten. Derartig geeignete Epoxidverbindungen besitzen in der Regel einen Erweichungspunkt im Bereich von 30 bis 70 °C Sie können sowohl gesättigt als auch ungesättigt sowie aliphatisch, cycloaliphatisch, aromatisch und heterocyclisch sein und auch Hydroxylgruppn aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen oder ähnliche.

Beispiele für geeignete Epoxidverbindungen sind: 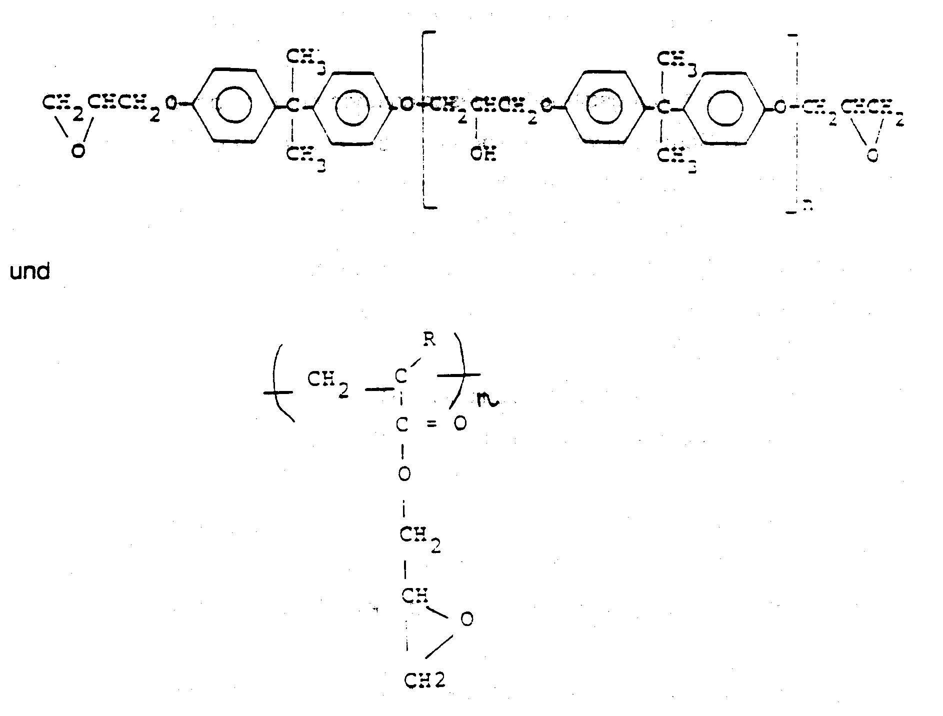
R bedeutet Wasserstoff oder einen Methylrest und n ist eine ganze Zahl im Bereich von 2 bis 50, vorzugsweise im Bereich 2 bis 30.

Ferner sind als Epoxide auch Verbindungen wie Triglycidylisocyanurat (TGIC) und/oder dessen Oligomere und Triglycidylurazol sowie dessen Oligomere und entsprechende Mischungen geeignet. Die Epoxidverbindungen können hierbei auch in Mischungen untereinander eingesetzt werden. Es ist jedoch zu beachten, daß auch hier die Glastemperatur der Pulverlackmischungen mindestens 30 bis 40 °C beträgt.
Vorzugsweise liegt sie im Bereich von 30 bis 70 °C.

In einer weiteren Ausführungsform enthält die erfindungsgemäße Beschichtungsmasse neben einem Polyarylensiloxan der Formel (I) 0,1 bis 3 Gew. % eines Katalysators. Als Katalysatoren kommen beispielsweise Azobisisobutyronitril (AIBN), Dibenzoylperoxid, Metachlorperbenzoesäure, tert.-Butylperoxid sowie weitere bekannte Radikalstarter in Frage. Die Schmelzviskositäten der erfindungsgemäßen Beschichtungsmassen auf der Basis von Polyarylensiloxanen der Formel (I) liegen, insbesondere für die Ausbildung von qualitativ hochwertigen Oberflächen, bei Temperaturen im Bereich von 100 bis 135°C unterhalb von 10 Pas, insbesondere im Bereich von 3 bis 8 Pas. Für Anwendungszwecke, bei denen die erfindungsgemäßen Beschichtungsmassen lediglich als Schutzüberzug dienen, sind auch höhere Schmelzviskositäten, bis zu 30 Pas, zulässig.

Die hier beschriebenen Beschichtungsmassen besitzen ein mittleres Molekulargewicht Mₙ (Zahlenmittel; bestimmt durch Gelchromatographie) im Bereich von 500 bis 50.000, vorzugsweise im Bereich von 800 bis 20.000 g/mol.

Da die Aushärtetemperaturen unter 140°, vorzugsweise im Bereich zwischen 100 und 135°C, insbesondere im Bereich von 100 bis 130°C, liegen, eignen sich die erfindungsgemäßen Beschichtungsmassen auch zur Lackierung einer Vielzahl von Polymeren (insbesondere von Polypropylen, Polycarbonat und Polyethylenterephthalat) und von Holz.

Die mit Hilfe der erfindungsgemäßen Beschichtungsmasse auf der Basis von Polyarylensiloxan der Formel (I) hergestellten Pulverlacke zeichnen sich durch eine hohe Transparenz und eine gute Lösemittelbeständigkeit, besonders gegenüber Butylacetat und aromatischen Kohlenwasserstoffen, wie Xylol, Toluol und Benzol, aus. Die so hergestellten Lacke besitzen eine hohe Kratzbeständigkeit und einen hohen Glanz und sind, insbesondere bei hohen Polyarylensiloxangehalten, flammwidrig.

### Beispiele:

### I. Synthese der Polyarylensiloxane

### Beispiel 1

In einem 500-ml-Dreihalskolben mit Rückflußkühler, Tropftrichter, Rührer und Innenthermometer werden unter Schutzgas 22,80 g (0,10 mol) Bisphenol-A mit 20,5 ml (0,26 mol) trockenem Pyridin und 50 ml trockenem Toluol gemischt. Die Suspension wird solange bei Raumtemperatur gerührt, bis sich das Bisphenol-A vollständig gelöst hat. Anschließend wird auf 50°C erhitzt und 12,30 g (0,098 mol) Dimethyldichlorsilan innerhalb von 45 Minuten zugetropft. Hierbei soll die Temperatur 55 - 60°C nicht überschreiten. Das Reaktionsgemisch wird für weitere 15 Minuten bei 55 - 60°C gerührt und anschließend auf Raumtemperatur abgekühlt. Zur Viskositätserniedrigung der Lösung werden 100 ml Toluol zugegeben. Die Isolierung des Polymeren erfolgt durch Eingießen der Lösung in 1,2 l intensiv gerührtes Methanol. Das dabei ausgefallene Polymer wird durch Filtration isoliert und bei 50 - 70°C im Vakuum getrocknet.
(Tg = 48°C, Tm (Schmelztemperatur) = 92°C, Schmelzviskosität (110°C) = 5,2 Pas, Mn (Molekulargewicht, Zahlenmittel) = 3870 g/mol, Mw (Molekulargewicht, Gewichtsmittel) = 20710 g/mol)

### Beispiel 2

In einem 500-ml-Dreihalskolben mit Rückflußkühler, Tropftrichter, Rührer und Innenthermometer werden unter Schutzgas 22,80 g (0,10 mol) Bisphenol-A mit 20,5 ml (0,26 mol) trockenem Pyridin und 50 ml trockenem Toluol gemischt. Die Suspension wird solange bei Raumtemperatur gerührt, bis sich das Bisphenol-A vollständig gelöst hat. Anschließend wird auf 50°C erhitzt und eine Mischung aus 12,30 g (0,095 mol) Dimethyldichlorsilan und 1:40 g (0,010 mol) Methylvinyldichlorsilan innerhalb von 45 Minuten zugetropft. Hierbei soll die Temperatur 55 - 60°C nicht überschreiten. Das Reaktionsgemisch wird für weitere 15 Minuten bei 55 - 60°C gerührt und anschließend auf Raumtemperatur abgekühlt. Zur Viskositätserniedrigung der Lösung werden 100 ml Toluol zugegeben. Die Isolierung des Polymeren erfolgt durch Eingießen der Lösung in 1,2 l intensiv gerührtes Methanol. Das dabei ausgefallene Polymer wird durch Filtration isoliert und bei 50 - 70°C im Vakuum getrocknet.
(Tg = 30°C, Tm = 94°C, Mn = 2900 g/mol, Mw = 12870 g/mol, Schmelzviskosität (100°C) = 4,5 Pas)

### Beispiel 3

In einem-500-ml Dreihalskolben mit Rückflußkühler, Rührer und Innenthermometer werden 33,62 g (0,10 mol) Hexafluorbisphenol-A in 50 ml trockenem Toluol und 20,5 ml Pyridin gelöst. Anschließend wird auf 50°C erhitzt und 13,00 g Dimethyldichlorsilan (0,10 mol) innerhalb von 45 min zugetropft. Die Temperatur liegt im Bereich von 55 - 65°C. Das Reaktionsgemisch wird weitere 30 min bei dieser Temperatur gerührt und anschließend mit 100 ml Toluol verdünnt. Das Polymer wird durch Ausfällen in 1,2 l Methanol und anschließende Filtration isoliert und bei 70°C im Vakuum getrocknet. (Tg = 58°C, Schmelzviskosität (134 °C) = 7,1 Pas, Mn = 4570 g/mol, Mw = 20710 g/mol)

### Beispiel 4

### Schmelzkondensation

In einem 100 ml Dreihalskolben werden 22,80 g (0,10 mol) Bisphenol-A mit 22,10 g (0,17 mol) Dimethyldichlorsilan gemischt und mit 0,1 ml Pyridin versetzt. Anschließend wird das Reaktionsgemisch auf 50 °C erhitzt und stufenweise innerhalb von 3 h bis auf 150 °C erwärmt. Abschließend wird die Kondensation unter Vakuum für 2 h fortgeführt. Das Polyarylensiloxan wird bei 140 °C über eine Filtervorrichtung geleitet. Das filtrierte Polymer wird bei 70 °C nachgetrocknet und ohne weitere Reinigung eingesetzt (Glastemperatur : 47 °C; Schmelzviskosität (110 °C) = 4.7 Pas; Mn = 2800 g/mol; Mw = 9300 g/mol).

### II Herstellung der Überzüge

### Härtung durch Erwärmung mit Epoxidharzen

### Beispiel 5

Eine Mischung aus 200 g Polyarylensiloxan erhalten aus 1 Teil Bisphenol-A und 1 Teil Dimethyldichlorsilan und 800 g polyfunktionelles Epoxidharz ®Beckopox EP 303 (Handelsprodukt der Fa. HOECHST, Frankfurt/Main) wird zusammen mit 15 g ®Additol SXL 120 (Imidazolderivat; Handelsprodukt der Fa. HOECHST, Frankfurt/Main) bei 80 - 100°C extrudiert. Die Mischung besitzt bei 140°C eine Gelzeit von 100 s. Der Ablauf nach Norton bei 140°C beträgt 31 mm). Nach Mahl- und Siebvorgang wird das erhaltene Pulver durch ein elektrostatisches Sprühverfahren auf eine Metalloberfläche aufgebracht. Eine anschließende Erwärmung des Metalls auf 120°C für 15 min führt zur Ausbildung transparenter Beschichtungen. Diese Beschichtungen weisen eine erhöhte Lösemittelstabilität, eine verbesserte Oberflächenqualität sowie verbesserte mechanische Eigenschaften auf.
Glanz: 100%
Erichsentiefung (DIN 53156): 10,8 mm
Schlagprüfung (ASTM D 2794) direkt: 160
Schlagprüfung (ASTM D 2794) indirekt: 120
Verlauf: 2; Krater: 1; Nadelstiche: 0
(Bewertung: 0 = sehr gut bis 5 = sehr schlecht)
Butylacetattest (3 min): 1
Xyloltest (30 min): 0
(Bewertung: 0 = sehr gut bis 5 = sehr schlecht)
Blockbeständigkeit (40°C; DIN 55990-3) nach 28 d: 1
(Bewertung: 0 = sehr gut bis 5 = sehr schlecht)
Der besondere Vorzug der Polyarylensiloxane enthaltenden Pulverlacke besteht in der deutlich abgesenkten Schmelzviskosität der Komposition im Vergleich zu Epoxidharzen ohne Polyarylensiloxane.

**Tabelle 1**

| Schmelzviskositäten von Expoxidharzen (EP-Harz) in Abhängikeit vom Gehalt an Polyarylensiloxan (gemäß Beispiel 5) | | |
|---|---|---|
| EP-Harz [Gew %] | Polyarylensiloxan [Gew %] | Schmelzviskosität (bei 120°C) [Pas] |
| 100 | 0 | 49,6 |
| 80 | 20 | 25,5 |
| 60 | 40 | 13,0 |
| 40 | 60 | 8,8 |
| 0 | 100 | 3,0 |

### Härtung durch radikalische Vernetzung

### Beispiel 6

10 g eines Polyarylensiloxans, erhalten aus 1 Teil Bisphenol-A, 0,1 Teilen Vinylmethyldichlorsilan und 0,9 Teilen Dimethyldichlorsilan wird mit 0,1 g Dibenzoylperoxid in einer Labormühle gemischt. Das so erhaltene Pulver wird auf eine Metallplatte aufgetragen und 30 min auf 100°C erhitzt. Es entsteht ein glasklarer Überzug mit ausgezeichneter Flexibilität und erhöhter Beständigkeit gegen 10 gew.-%ige Schwefelsäure.

### Beispiel 7

10 g eines Polyarylensiloxans, erhalten aus 1,0 Mol. Bisphenol-A, 0,1 Mol. Vinylmethyldichlorsilan, 0,9 Mol. Dimethyldichlorsilan wird mit 0,1 g Dibenzoylperoxid in einer Labormühle gemischt. Das so erhaltene Pulver wird auf eine unbehandelte Polypropylenoberfläche aufgebracht und 15 min auf 110°C erhitzt. Es entsteht ein glasklarer Überzug mit ausgezeichneter Flexibilität. Der Überzug zeichnet sich durch eine hervorragende Haftung auf Polypropylen aus. Die Beständigkeit gegen 10 gew.-%ige Schwefelsäure ist gegenüber dem unvernetzten Material deutlich erhöht.

### Beispiel 8

Eine Mischung aus 245 g Polyarylensiloxan, erhalten aus 1 Teil Bisphenol-A und 1 Teil Dimethyldichlorsilan, und 728 g polyfunktionellem Epoxidharz Beckopex EP 303 (Handelsprodukt der Fa. Hoechst, Frankfurt/Main) wird zusammen mit 25 g Additol SXL 120 (Imidazolderivat, Handelsprodukt der Fa. Hoechst, Frankfurt/Main) und 2 g Dow Corning PA 56 (Handelsprodukt der Fa. Dow Chemicals) bei 80 bis 100°C extrudiert. Die Mischung besitzt bei 140°C eine Gelzeit von 87 s, der Ablauf nach Norton bei 140°C beträgt 42 mm. Nach Mahl- und Siebvorgang wird das erhaltene Pulver durch ein elektrostatisches Sprühverfahren auf eine Metalloberfläche aufgebracht. Eine anschließende Erwärmung des Metalls auf 120°C für 20 min führt zur Ausbildung transparenter Beschichtungen. Diese hochglänzenden Beschichtungen weisen eine exzellente Oberflächenqualität, gute mechanische Eigenschaften sowie gute Lösemittelstabilität auf:
Schichtdicke 55 »m, Glanz 108 %;
Erichsentiefung (DIN 53156) 9,7 mm
Schlagprüfung (ASTM D 2794) direkt: 120
Schlagprüfung (ASTM D 2794) indirekt: 80
Butylacetattest (3 min): 2
Xyloltest (30 min): 0
(Bewertung: 0 = sehr gut bis 5 = sehr schlecht)
Blockbeständigkeit (40°C; DIN 55990-3) nach 28 d: 2
(Bewertung: 0 = sehr gut bis 5 = sehr schlecht)
Verlauf: 1; Krater: 0; Nadelstiche: 0
(Bewertung: 0 = sehr gut bis 5 = sehr schlecht)

## Patentansprüche

1. Härtbare, pulverförmige Beschichtungsmasse auf der Basis von Polyarylensiloxanen, enthaltend 1 bis 99,9 Gew. % eines oder mehrerer Polyarylensiloxane der Formel (I) 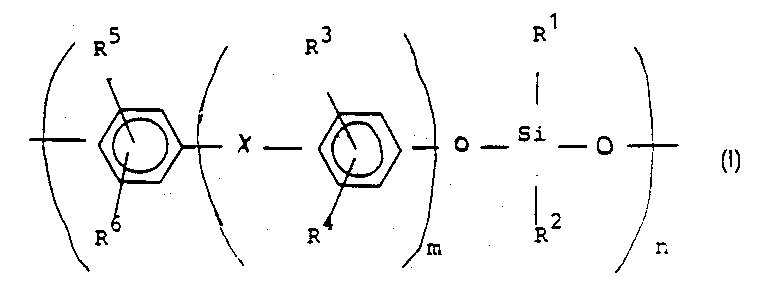 wobei die Symbole R¹, R², R³, R⁴, R⁵, R⁶ X, m und n folgende Bedeutung haben:
R¹ und R² sind gleich oder verschieden und stehen unabhängig voneinander für einen geradkettigen oder verzweigten C₁ - C₁₂-Alkylrest, einen substituierten oder unsubstituierten C₆ - C₁₄-Arylrest oder einen gegebenenfalls substituierten Vinylrest;
R³, R⁴, R⁵ und R⁶ sind gleich oder verschieden und stehen unabhängig voneinander für Wasserstoff, einen verzweigten oder unverzweigten C₁ - C₃ Alkylrest oder einen substituierten oder unsubstituierten C₆ - C₁₄-Arylrest;
-X- steht für eine Gruppe 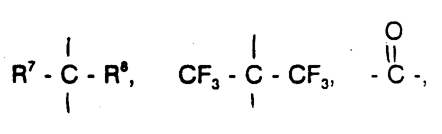 - SO₂ - oder für Sauerstoff oder Schwefel oder für eine Bindung,
wobei R⁷ und R⁸ unabhängig voneinander für Wasserstoff oder einen verzweigten oder unverzweigten C₁-C₆-Alkyl- oder C₆-C₁₄-Aryl- oder einen substituierten oder unsubstituierten C₃-C₉-Cycloalkylrest bedeuten;
m ist Null oder 1
und Polymerisationsgrad n liegt im Bereich von 2 bis 100.

2. Härtbare, pulverförmige Beschichtungsmasse nach Anspruch 1, dadurch gekennzeichnet, daß diese 0,1 bis 95 Gew. % einer Epoxidgruppen enthaltenden Komponente enthält.

3. Härtbare, pulverförmige Beschichtungsmasse nach Anspruch 1, dadurch gekennzeichnet, daß diese 0,1 bis 3 Gew. % eines Katalysators enthält.

4. Härtbare, pulverförmige Beschichtungsmasse nach Anspruch 1 dadurch gekennzeichnet, daß diese eine Schmelzviskosität von weniger als 10 Pas bei einer Temperatur im Bereich von 100 bis 135°C besitzt.

5. Härtbare, pulverförmige Beschichtungsmasse nach Anspruch 1, dadurch gekennzeichnet, daß diese eine Glasübergangstemperatur im Bereich von 30 bis 70°C aufweist.

6. Pulverförmige, härtbare Beschichtungsmasse nach Anspruch 1, dadurch gekennzeichnet, daß das mittlere Molekulargewicht (Mn) der Beschichtungsmasse im Bereich von 500 bis 50.000 g/mol liegt.

7. Härtbare, pulverförmige Beschichtungsmasse nach Anspruch 1, dadurch gekennzeichnet, daß die Aushärtetemperaturen im Bereich von 100 bis 135°C liegen.

8. Härtbare, pulverförmige Beschichtungsmasse nach Anspruch 1, dadurch gekennzeichnet, daß sie eine hohe Transparenz und eine gute Lösemittelbeständigkeit besitzt.

## Claims

1. A curable powdered coating composition based on polyarylenesiloxanes, comprising from 1 to 99.9 % by weight of one or more polyarylenesiloxanes of the formula (I) 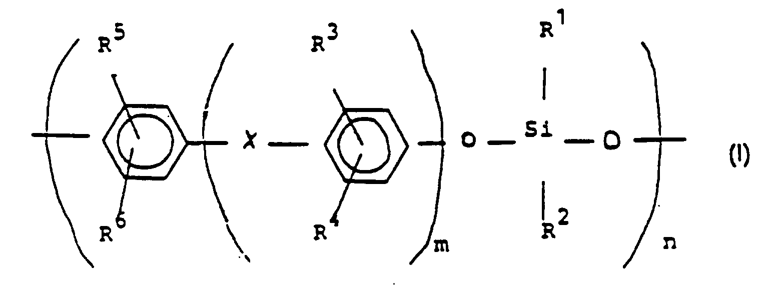 in which the symbols R¹, R², R³, R⁴, R⁵, R⁶, X, m and n have the following meaning:
R¹ and R² are identical or different and independently of one another are a straight-chain or branched C₁-C₁₂-alkyl radical, a substituted or unsubstituted C₆-C₁₄-aryl radical or a substituted or unsubstituted vinyl radical;
R³, R⁴, R⁵ and R⁶ are identical or different and independently of one another are hydrogen, a branched or unbranched C₁-C₃-alkyl radical or a substituted or unsubstituted C₆-C₁₄-aryl radical;
-X- is a group 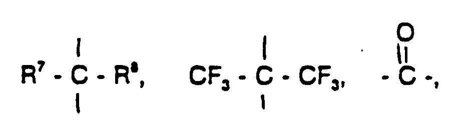 - SO₂ - or is oxygen or sulfur or a bond,
R⁷ and R⁸ independently of one another being hydrogen or a branched or unbranched C₁-C₆-alkyl, C₆-C₁₄-aryl or a substituted or unsubstituted C₃-C₉-cycloalkyl radical;
m is zero or 1
and the degree of polymerization n is in the range from 2 to 100.

2. A curable powdered coating composition as claimed in claim 1, which contains from 0.1 to 95 % by weight of a component comprising epoxide groups.

3. A curable powdered coating composition as claimed in claim 1, which contains from 0.1 to 3 % by weight of a catalyst.

4. A curable powdered coating composition as claimed in claim 1, which has a melt viscosity of less than 10 Pas at a temperature in the range from 100 to 135°C.

5. A curable powdered coating composition as claimed in claim 1, which has a glass transition temperature in the range from 30 to 70°C.

6. A curable powdered coating composition as claimed in claim 1, wherein the average molecular weight (Mₙ) of the coating composition is in the range from 500 to 50,000 g/mol.

7. A curable powdered coating composition as claimed in claim 1, wherein the full-cure temperatures are in the range from 100 to 135°C.

8. A curable powdered coating composition as claimed in claim 1, which has a high transparency and good solvent resistance.

## Revendications

1. Composition de revêtement pulvérulente durcissable à base de polyarylènesiloxanes, contenant 1 à 99,9 % en masse d'un ou plusieurs polyarylènesiloxanes de formule (I) 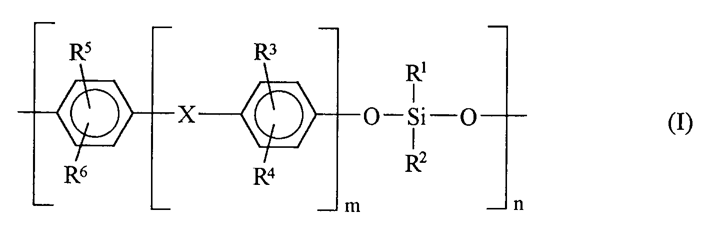 dans laquelle les symboles R¹, R², R³, R⁴, R⁵, R⁶, X, m et n ont la signification suivante:
R¹ et R² sont identiques ou différents et représentent indépendamment l'un de l'autre un reste alkyle en C₁-C₁₂ linéaire ou ramifié, un reste aryle en C₆-C₁₄ substitué ou non substitué ou un reste vinyle éventuellement substitué;
R³, R⁴, R⁵ et R⁶ sont identiques ou différents et représentent indépendamment les uns des autres un hydrogène, un reste alkyle en C₁-C₃ linéaire ou ramifié ou un reste aryle en C₆-C₁₄ substitué ou non substitué.
-X- représente un groupe 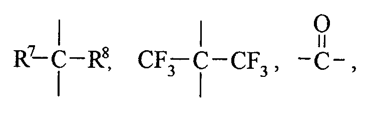 - SO₂ - ou est l'oxygène ou le soufre ou une liaison,
R⁷ et R⁸ représentant indépendamment l'un de l'autre un hydrogène ou un reste alkyle en C₁-C₆ linéaire ou ramifié, ou un reste aryle en C₆-C₁₄ ou un reste cycloalkyle en C₃-C₉ substitué ou non substitué;
m est égal à 0 ou 1 et
le degré de polymérisation n est compris entre 2 et 100.

2. Composition de revêtement pulvérulente durcissable selon la revendication 1, caractérisée en ce qu'elle contient 0,1 à 95 % en masse d'un constituant contenant des groupes époxy.

3. Composition de revêtement pulvérulente durcissable selon la revendication 1, caractérisée en ce qu'elle contient 0,1 à 3 % en masse d'un catalyseur.

4. Composition de revêtement pulvérulente durcissable selon la revendication 1, caractérisée en ce qu'elle possède une viscosité en fusion inférieure à 10 Pas à une température comprise entre 100 et 135°C.

5. Composition de revêtement pulvérulente durcissable selon la revendication 1, caractérisée en ce qu'elle a une température de transition vitreuse comprise entre 30 et 70°C.

6. Composition de revêtement pulvérulente durcissable selon la revendication 1, caractérisée en ce que la masse moléculaire moyenne (Mₙ) de la composition de revêtement est comprise entre 500 et 50 000 g/mole.

7. Composition de revêtement pulvérulente durcissable selon la revendication 1, caractérisée en ce que les températures de durcissement sont comprises entre 100 et 135°C.

8. Composition de revêtement pulvérulente durcissable selon la revendication 1, caractérisée en ce qu'elle possède une transparence élevée et une bonne résistance aux solvants.
